# EUROPÄISCHE PATENTSCHRIFT

(11) **EP 1 010 770 B1**
(45) Veröffentlichungstag und Bekanntmachung des Hinweises auf die Patenterteilung: **22.10.2003**
(21) Anmeldenummer: 99122721.6
(22) Anmeldetag: 16.11.1999
(51) Int. Cl.: C22C 47/04

(54) **Verfahren zur Herstellung von kohlenstofffaserverstärkten Metallmatrix-Verbundwerkstoffen**
Method of making carbon fibre reinforced metal-matrix composites
Procédé de fabrication de matériaux composites ayant une matrice de métal renforcée par des fibres de carbone

(30) Priorität: 16.12.1998 DE 19858030
(43) Veröffentlichungstag der Anmeldung: 21.06.2000
(73) Patentinhaber: Bayerische Motoren Werke Aktiengesellschaft, 80809 München (DE)
(72) Erfinder: Fritze, Christiane, Dr., 82327 Tutzing (DE)

(56) Entgegenhaltungen:
- K.U. KAINER: "Metallische Verbundwerkstoffe" 1994 , DGM-INFORMATIONSGESELLSCHAFT , OBERURSEL XP000900020 * Seite 101 - Seite 116 *
- H. VINCENT ET AL.: "Boron carbide formation ..." CARBON, Bd. 34, Nr. 9, 1996, Seiten 1041-1055, XP000634674
- CHEMICAL ABSTRACTS, vol. 110, no. 8, 20. Februar 1989 (1989-02-20) Columbus, Ohio, US; abstract no. 62581p, Y. UCHIDA: "Method for coating metals on carbon articles" XP000018447 & JP 63 192873 A (TOA OIL CO., LTD.) 10. August 1988 (1988-08-10)

## Beschreibung

Die Erfindung bezieht auf ein Verfahren zur Herstellung von Metallmatrix-Verbundwerkstoffen mit Kohlenstofffaserverstärkung nach dem Oberbegriff des Anspruchs 1.

Dieses Verfahren wird allgemein zur Herstellung von Kohlenstofffaser verstärkten Metallmatrix-Verbundwerkstoffen, insbesondere Leichtmetallmatrix-Verbundwerkstoffen verwendet, wobei als Verstärkungsfasern vor allem Kurzfasern eingesetzt werden (vgl. Hengeler, H.; Buschmann, R; Elstner, I.: Herstellung, *Eigenschaften und Anwendungen von Kurz- und Langfaserpreforms* in "Metallische Verbundwerkstoffe", Fortbildungsseminar der DGM; Kainer, K.U. (Hrsg.); DGM-Informationsgesellschaft, Oberursel (1994)

Dabei wird eine Suspension aus den Fasern in Wasser, das ein organisches Bindemittel, wie Stärke, und ein anorganisches Bindemittel, insbesondere SiO₂ oder Al₂O₃ in kolloidaler' Lösung enthält, hergestellt. Die Suspension wird in eine Form gegeben, aus der das Wasser abgesaugt wird, wodurch ein Formteil, die sog. Preform aus den durch die Bindemittel miteinander verbundenen Fasern gebildet wird. Die Preform wird meist nachgepresst, getrocknet und dann erhitzt, um das organische Bindemittel auszubrennen. Sie kann dann mit der Metallschmelze beispielsweise nach dem Squeeze-Casting-Verfahren infiltriert werden, um nach dem Erstarren des Metalls das faserverstärkte Metallformteil zu erhalten.

Während dieses Verfahren bei Verwendung von Metalloxidfasern, wie Aluminiumoxid-Fasern problemlos funktioniert und zu Metallmatrix-Verbundwerkstoffen mit einer für Metalloxid-Fasern zufriedenstellenden Festigkeit führt, ist bei Verwendung von Kohlenstofffasern eine gleichmäßige Verteilung der Binder nicht möglich, so wird eine Preform gebildet, die eine derart geringe Festigkeit besitzt, daß sie bei ihrer Handhabung, beispielsweise beim Herausnehmen aus der Form leicht zerbricht. Weiterhin weisen die hergestellten Metallmatrix-Verbundwerkstoffe völlig unzureichende Festigkeitseigenschaften auf.

Um diesen Problemen abzuhelfen, werden beispielsweise für die Verstärkung von Magnesiumwerkstoffen Kohlenstofffasern verwendet, die eine Titannitrid-Beschichtung aufweisen. Eine derartige Beschichtung stellt jedoch einen kostenintensiven Faktor dar. Dies gilt insbesondere bei der Verwendung von Kurzfasern. Denn dazu ist die Beschichtung von Langfasern erforderlich, die zu Kurzfasern geschnitten oder gemahlen werden. Auch lassen die Festigkeitseigenschaften der mit diesen Kurzfasern verstärkten Magnesiumwerkstoffe noch zu wünschen übrig. Dies dürfte auch darauf zurückzuführen sein, dass die durch Schneiden oder Mahlen hergestellten Kurzfasern an ihren Faserenden nicht beschichtet sind und zudem die Schicht beim Schneiden oder Mahlen zumindest teilweise abplatzen kann.

Ferner ist es bekannt, duroplastische Kunststoffe, wie Epoxid-Kunststoffe mit anodisch oxidierten Kohlenstofffasern zu verstärken (Journal of Materials Science, 1992; 4591-4597; Journal of China Textile University, English Edition, 1994; 79-83). Durch die anodische Oxidation werden an der Kohlenstofffaser funktionelle Gruppen gebildet, die mit den Amingruppen des Härters reagieren, mit dem das Expoxid-Harz ausgehärtet wird.

Aufgabe der Erfindung ist es, mit geringem Herstellungsaufwand Kohlenstofffaser verstärkte Metallmatrix-Verbundwerkstoffe hoher Festigkeit bereitszustellen.

Dies wird erfindungsgemäß mit dem im Anspruch 1 gekennzeichneten Verfahren erreicht. In den Unteransprüchen sind vorteilhafte Ausgestaltungen des erfindungsgemäßen Verfahrens wiedergegeben.

Nach der Erfindung werden zur Verstärkung der Metallmatrix anodisch oxidierte Kohlenstofffasern verwendet. Solche Fasern können beispielsweise nach Journal of Materials Science, 1992; 4591-4597 und Journal of China Textile University, English Edition, 1994; 79-83 durch anodische Oxidation in einer Elektrolysezelle in einer wässrigen Ammoniumsulfatlösung mit einer Graphitkathode hergestellt werden, und zwar auch als Kurzfasern.

Da sie wie z.B. Aluminiumoxid-Fasern ohne jegliche zusätzliche Behandlung zur Verstärkung von Leichtmetallen eingesetzt werden können, ist das erfindungsgemäße Verfahren mit einem geringen Herstellungsaufwand verbunden. Insbesondere wird durch den Einsatz der anodisch oxidierten Kohlenstofffasern eine Preform mit einer Festigkeit erhalten, die der einer Preform aus Aluminiumoxidfasern entspricht. Zudem besitzt der erfindungsgemäße Kohlenstofffaser verstärkte Metallmatrix-Verbundwerkstoff hervorragende Festigkeitseigenschaften.

Eine stabile Preform und ein Verbundwerkstoff mit hohen Festigkeitseigenschaften wird insbesondere dann erhalten, wenn das organische Bindemittel, das zur Preform-Herstellung verwendet wird, ein Polymeres mit elektrisch positiven Ladungen ist, beispielsweise Stärke, und das anorganische Bindemittel beispielsweise Siliziumoxid oder ein Metalloxid, wie Aluminiumoxid, mit elektrisch negativen Ladungen.

Möglicherweise ist die stabile Preform deshalb darauf zurückzuführen, das die anodisch oxidierten Kohlenstofffasern funktionelle Gruppen aufweisen, die mit den elektrisch positiven Ladungen des Polymeren in Wechselwirkung treten, und das Polymere seinerseits mit dem Siliziumoxid oder Metalloxid in Wechselwirkung tritt. Andererseits könnte die Erhöhung der Festigkeit des nach dem erfindungsgemäßen Verfahren hergestellten Verbundwerkstoff darauf zurückzuführen sein, daß die anodisch oxidierten Kohlenstofffasern eine Reaktion mit dem Matrix-Werkstoff unter Bildung einer polykristallinen Faser/Matrix-Grenzfläche eingehen.

Die Kohlenstoffkurzfasern, die für das erfindungsgemäße Verfahren verwendet werden, können einen Durchmesser von beispielsweise 1-30 µm, insbesondere 5-10 µm besitzen, und eine mittlere Länge von z.B. 0,1-3 mm, vorzugsweise 0,3-0,7 mm. Es können jedoch auch Langfasern, also anodisch oxidierte Kohlenstofffasern mit einer Länge von mehr als 3 mm eingesetzt werden.

Die Metallmatrix wird insbesondere durch Leichtmetalle gebildet, also Magnesium- oder Aluminiumwerkstoffe, d.h., durch Magnesium- oder Aluminium-Metall oder Magnesium- oder Aluminium-Legierungen.

Das organische Bindemittel, das zur Herstellung der Preform verwendet wird, kann Stärke oder ein anderes Polymeres mit elektrisch positiven Ladungen sein, das anorganische Bindemittel Siliziumoxid in Form von kolloiden Lösungen oder ein Metalloxid, wie Aluminiumoxid, mit negativen elektrischen Ladungen sein.

Die nach dem erfindungsgemäßen Verfahren hergestellte Preform, die mit dem flüssigen Metall infiltriert wird, weist einen Faservolumengehalt von vorzugsweise 10-30 Vol.-%, insbesondere 15-25 Vol.-% auf. Die Preform kann dabei, wie an sich üblich, durch Suspendieren der Kohlenstofffasern in Wasser, das das organische Bindemittel, also z.B. Stärke, und das anorganische Bindemittel, also beispielsweise SiO₂ enthält, hergestellt werden. Die Suspension wird in eine Gießform gegeben, worauf das Wasser, z.B. durch Absaugen entfernt wird. Die Preform aus den durch die Bindemittel miteinander verbundenen Fasern wird ggf. nachgepresst und dann getrocknet und erhitzt, um das organische Bindemittel auszubrennen.

Das Infiltrieren der Preform mit der Metallschmelze kann beispielsweise durch das Squeeze-Casting-Verfahren, die Gasdruck-Infiltration oder andere Gießverfahren erfolgen.

Nach dem erfindungsgemäßen Verfahren können Formkörper beliebiger Form hergestellt werden, aber auch Platten, Rohre, Stangen und dgl. Zur Herstellung von Rohren kann beispielsweise das Vakuum-Saugverfahren angewendet werden.

Bei Verwendung von Magnesium- oder Aluminiumwerkstoffen werden erfindungsgemäß Leichtbauwerkstoffe erhalten, die beispielsweise in der Fahrzeugindustrie eingesetzt werden können, z.B. im Motorenbau zur Herstellung von Kolben oder dgl. bewegter Motorenteile.

Durch die Kohlenstofffaserverstärkung des Metalles entsteht ein Verbundwerkstoff, der sich durch erhöhte Festigkeit, E-Modul und erhöhte Warmfestigkeit auszeichnet. Zugleich wird die Verschleißbeständigkeit erhöht und der thermische Ausdehnungskoeffizient reduziert.

In dem nach dem erfindungsgemäßen Verfahren hergestellten Formkörper kann eine homogene Verteilung der Kohlenstofffasern vorliegen. Es kann jedoch auch eine partielle Verstärkung durch die Kohlenstofffasern in den höher beanspruchten Bereichen eines Formkörpers vorgesehen sein.

## Patentansprüche

1. Verfahren zur Herstellung von Metallmatrix-Verbundwerkstoffen mit Kohlenstofffaserverstärkung, bei dem eine Preform, die aus einer Suspension der Kohlenstofffasern mit einem organischen und einem anorganischen Bindemittel hergestellt wird, mit dem geschmolzenen Metall infiltriert wird, **dadurch gekennzeichnet, dass** als Kohlenstofffasern anodisch oxidierte Kohlenstofffasern verwendet werden.

2. Verfahren nach Anspruch 1, **dadurch gekennzeichnet, dass** als Kohlenstofffasern anodisch oxidierte Kohlenstoffkurzfasern verwendet werden.

3. Verfahren nach Anspruch 1, **dadurch gekennzeichnet, dass** das Metall der Metallmatrix durch einen Magnesium- oder Aluminiumwerkstoff gebildet wird.

4. Verfahren nach Anspruch 1, **dadurch gekennzeichnet, dass** als anorganisches Bindemittel Siliziumoxid oder ein Metalloxid mit elektrisch negativen Ladungen verwendet wird.

5. Verfahren nach Anspruch 1, **dadurch gekennzeichnet, dass** als organisches Bindemittel ein Polymeres mit elektrisch positiven Ladungen verwendet wird.

## Claims

1. A method of producing metal matrix composite materials reinforced with carbon fibres, wherein a preform produced from a suspension of the carbon fibres with an organic and an inorganic binder is infiltrated with the molten metal, **characterised in that** the carbon fibres are anodically oxidised.

2. A method according to claim 1, **characterised in that** the carbon fibres are anodically oxidised short fibres.

3. A method according to claim 1, **characterised in that** the metal in the matrix is in the form of a magnesium or aluminium material.

4. A method according to claim 1, **characterised in that** the inorganic binder is silicon oxide or a metal oxide with negative electric charges.

5. A method according to claim 1, **characterised in that** the inorganic binder is a polymer with positive electric charges.

## Revendications

1. Procédé de fabrication de matériaux composites ayant une matrice de métal renforcée par des fibres de carbone dans lequel un pré-formé fabriqué à partir d'une suspension de fibres de carbone avec un liant organique et un liant inorganique est infiltré avec du métal fondu,
**caractérisé en ce que**
les fibres de carbone utilisées sont oxydées anodiquement.

2. Procédé selon la revendication 1,
**caractérisé en ce que**
les fibres de carbone sont des fibres courtes, oxydées anodiquement.

3. Procédé selon la revendication 1,
**caractérisé en ce que**
le métal de la matrice de métal est formé par un matériau de magnésium ou d'aluminium.

4. Procédé selon la revendication 1,
**caractérisé en ce que**
le liant inorganique utilisé est de l'oxyde de silicium ou un oxyde de métal avec des charges électriques négatives.

5. Procédé selon la revendication 1,
**caractérisé en ce que**
le liant organique utilisé est une polymère avec des charges électriques positives.
